# EUROPEAN PATENT SPECIFICATION

(11) **EP 4 362 285 B1**
(45) Date of publication and mention of the grant of the patent: **06.08.2025**
(21) Application number: 23205151.6
(22) Date of filing: 23.10.2023
(51) Int. Cl.: H02K 1/276

(54) **ROTOR, MOTOR, AND VEHICLE**
ROTOR, MOTOR UND FAHRZEUG
ROTOR, MOTEUR ET VÉHICULE

(30) Priority: 29.10.2022 CN 202222886508 U
(43) Date of publication of application: 01.05.2024
(73) Proprietor: Huawei Digital Power Technologies Co., Ltd., Shenzhen, Guangdong 518043 (CN)
(72) Inventor: HUANG, Weihua, Shenzhen, Guangdong 518043 (CN); LAN, Binan, Shenzhen, Guangdong 518043 (CN); CAO, Chao, Shenzhen, Guangdong 518043 (CN)
(74) Representative: Maiwald GmbH

(56) References cited:
- CN-A- 112 271 838
- CN-A- 112 271 839
- CN-A- 114 498 977

## Description

### TECHNICAL FIELD

This application relates to the field of motor technologies, and in particular, to a rotor, a motor, and a vehicle.

### BACKGROUND

In an interior permanent magnet motor, a permanent magnet is disposed in a groove of a rotor, and the rotor has a magnetic bridge used for strength supporting. The magnetic bridge causes a magnetic leakage phenomenon of the motor. To reduce magnetic leakage of a motor, a conventional means is as follows: removing all magnetic bridges in a rotor, so that a rotor core in the rotor is divided into a plurality of rotor sheets; connecting the plurality of rotor sheets into a whole by using a sleeve; and disposing a permanent magnet in a gap between the rotor sheets.

For a rotor of a dual-V topology, after all magnetic bridges in the rotor are removed, there are excessive discrete rotor sheets, and consequently a size of the rotor sheet is comparatively small. This increases difficulty of rotor sheet processing, and makes it inconvenient to connect a plurality of rotor sheets and a permanent magnet into a whole.

CN 114498977 A describes a rotor core for an electric vehicle..

### SUMMARY

To resolve the technical issues, embodiments of this application provide a rotor, a motor, and a vehicle, to reduce magnetic leakage of a rotor, and also decrease difficulty of rotor processing and assembly.

The present invention is defined by the subject-matter of the the independent claim 1. Additional features of the invention are presented in the dependent claims.

According to a first aspect, this application provides a rotor. The rotor includes a central core, a plurality of peripheral cores, and a sleeve. The central core includes an axial hole that penetrates along an axial direction and a plurality of mounting positions distributed along a circumferential direction of the central core. The plurality of peripheral cores and the central core are always accommodated in the sleeve. The plurality of peripheral cores are in one-to-one correspondence with the plurality of mounting positions. Each peripheral core is disposed in a corresponding mounting position. Each peripheral core is spaced apart from the central core to form a first separation gap, a second separation gap, and a third separation gap that communicate with each other. The first separation gap and the second separation gap form a first included angle less than 180° facing the sleeve and are respectively configured to accommodate a first permanent magnet and a second permanent magnet. The first permanent magnet and the second permanent magnet are disposed on two sides of the third separation gap. The first permanent magnet and the second permanent magnet are respectively spaced apart from the sleeve to form a first magnetic isolation gap and a second magnetic isolation gap. Each peripheral core is provided with an open slot. The open slot is configured to accommodate a third permanent magnet and a fourth permanent magnet. The third permanent magnet and the fourth permanent magnet are respectively spaced apart from the sleeve to form a third magnetic isolation gap and a fourth magnetic isolation gap or spaced apart from an end wall of the open slot to form a first magnetic isolation slot and a second magnetic isolation slot.

The first permanent magnet and the second permanent magnet are disposed on the two sides of the third separation gap, so that the first permanent magnet and the second permanent magnet are separated by the third separation gap, thereby reducing magnetic leakage of the first permanent magnet and the second permanent magnet. The first magnetic isolation gap is located between the sleeve and the first permanent magnet, and magnetic leakage of the first permanent magnet is reduced by using the first magnetic isolation gap. The second magnetic isolation gap is located between the sleeve and the second permanent magnet, and magnetic leakage of the second permanent magnet is reduced by using the second magnetic isolation gap. The third permanent magnet is spaced apart from the sleeve to form the third magnetic isolation gap, and magnetic leakage of the third permanent magnet is reduced by using the third magnetic isolation gap. The fourth permanent magnet is spaced apart from the sleeve to form the fourth magnetic isolation gap, and magnetic leakage of the fourth permanent magnet is reduced by using the fourth magnetic isolation gap. Magnetic leakage of the first permanent magnet, the second permanent magnet, the third permanent magnet, and the fourth permanent magnet is reduced, so that magnetic density of a rotor magnetic field generated by the rotor is increased.

The first separation gap and the second separation gap form the first included angle less than 180°, and the first permanent magnet disposed in the first separation gap and the second permanent magnet disposed in the second separation gap are arranged approximately in a V-shaped pattern. When the rotor is applied to a motor, a magnetomotive force generated by the motor in a no-load state can be closer to a sine wave, so that harmonic content in air-gap flux density in the motor can be reduced, thereby reducing an iron loss of the motor in the no-load state.

When the third permanent magnet and the fourth permanent magnet are respectively spaced apart from the end wall of the open slot to form the first magnetic isolation slot and the second magnetic isolation slot, the first magnetic isolation slot and an edge that is closer to the sleeve and that is of the peripheral core at which the first magnetic isolation slot is located form a first magnetic bridge, and the second magnetic isolation slot and the edge that is closer to the sleeve and that is of the peripheral core at which the second magnetic isolation slot is located form a second magnetic bridge. The first magnetic bridge is formed by disposing the first magnetic isolation slot in the peripheral core, and the second magnetic bridge is formed by disposing the second magnetic isolation slot in the peripheral core. For example, a material of the peripheral core is silicon steel. After the first magnetic isolation slot is disposed in the peripheral core, silicon steel reserved between the first magnetic isolation slot and the edge, of the peripheral core, closer to the sleeve is the first magnetic bridge. After the second magnetic isolation slot is disposed in the peripheral core, silicon steel reserved between the second magnetic isolation slot and the edge, of the peripheral core, closer to the sleeve is the second magnetic bridge. With the first magnetic bridge and the second magnetic bridge, the peripheral core is of an integral structure, which facilitates processing of the peripheral core, and during rotor assembly, it is easier to ensure rotor roundness and makes rotor eccentricity unlikely.

With reference to the first aspect, in a possible implementation, the first permanent magnet is in transition fit or interference fit with the first separation gap. This is conducive to fastening the first permanent magnet in position. The second permanent magnet is in transition fit or interference fit with the second separation gap. This is conducive to fastening the second permanent magnet in position.

With reference to the first aspect, in a possible implementation, a width size of the first separation gap is equal to a width size of the second separation gap, and a width size of the third separation gap is less than or equal to the width size of the first separation gap. When the width size of the third separation gap is less than the width size of the first separation gap, positions of the first permanent magnet and the second permanent magnet can be limited by using the third separation gap. For example, a boundary of the third separation gap can prevent the first permanent magnet in the first separation gap from moving to the third separation gap. Likewise, a boundary of the third separation gap can prevent the second permanent magnet in the second separation gap from moving to the third separation gap.

With reference to the first aspect, the open slot includes a first magnetic slot, a third magnetic isolation slot, and a second magnetic slot that communicate with each other. The first magnetic slot and the second magnetic slot form a second included angle less than 180° facing the sleeve and are respectively configured to accommodate the third permanent magnet and the fourth permanent magnet. The third permanent magnet and the fourth permanent magnet are disposed on two sides of the third magnetic isolation slot. The third permanent magnet and the fourth permanent magnet are arranged approximately in a V-shaped pattern. The first permanent magnet, the second permanent magnet, the third permanent magnet, and the fourth permanent magnet are approximately of a dual-V topology structure, which can increase the magnetic density of the rotor magnetic field generated by the rotor, and can also reduce the harmonic content in the air-gap flux density in the motor. When the rotor is applied to the motor, the magnetomotive force generated by the motor in the no-load state can be closer to the sine wave, thereby reducing the iron loss of the rotor when the motor is in the no-load state. The third magnetic isolation slot can isolate the third permanent magnet from the fourth permanent magnet, thereby reducing magnetic leakage of the third permanent magnet and the fourth permanent magnet, to increase the magnetic density of the rotor magnetic field generated by the rotor.

With reference to the first aspect, in a possible implementation, the third permanent magnet is in transition fit or interference fit with the first magnetic slot. This is conducive to fastening the third permanent magnet in position. The fourth permanent magnet is in transition fit or interference fit with the second magnetic slot. This is conducive to fastening the fourth permanent magnet.

With reference to the first aspect, in a possible implementation, a width size of the first magnetic slot is equal to a width size of the second magnetic slot, and a width size of the third magnetic isolation slot is less than or equal to the width size of the first magnetic slot. When the width size of the third magnetic isolation slot is less than the width size of the first magnetic slot, positions of the third permanent magnet and the fourth permanent magnet can be limited by using the third magnetic isolation slot. For example, a boundary of the third magnetic isolation slot can prevent the third permanent magnet in the first magnetic slot from moving to the third magnetic isolation slot. Further, a boundary of the third magnetic isolation slot can prevent the fourth permanent magnet in the second magnetic slot from moving to the third magnetic isolation slot.

With reference to the first aspect, the third magnetic isolation slot is parallel to the third separation gap.

With reference to the first aspect, in a possible implementation, the first included angle is less than the second included angle.

With reference to the first aspect, in a possible implementation, the open slot includes a first magnetic slot and a second magnetic slot, the first magnetic slot and the second magnetic slot are spaced apart, and the first magnetic slot and the second magnetic slot form a second included angle less than 180° facing the sleeve. The third permanent magnet and the fourth permanent magnet are arranged approximately in a V-shaped pattern. The first permanent magnet, the second permanent magnet, the third permanent magnet, and the fourth permanent magnet are approximately of a dual-V topology structure, which can increase the magnetic density of the rotor magnetic field generated by the rotor, and can also reduce the harmonic content in the air-gap flux density in the motor. When the rotor is applied to the motor, the magnetomotive force generated by the motor in the no-load state can be closer to the sine wave, thereby reducing the iron loss of the rotor when the motor is in the no-load state. A third magnetic bridge is formed between the first magnetic slot and the second magnetic slot. The third magnetic bridge is formed by disposing the first magnetic slot and the second magnetic slot in the peripheral core. For example, when the first magnetic slot and the second magnetic slot are disposed in the peripheral core, a part reserved between the first magnetic slot and the second magnetic slot is the third magnetic bridge. When the third permanent magnet and the fourth permanent magnet are respectively spaced apart from the sleeve to form the third magnetic isolation gap and the fourth magnetic isolation gap, with the third magnetic bridge, the peripheral core is of an integral structure, which facilitates processing of the peripheral core, and during rotor assembly, it is easier to ensure rotor roundness and makes rotor eccentricity unlikely. When the third permanent magnet and the fourth permanent magnet are respectively spaced apart from the end wall of the open slot to form the first magnetic isolation slot and the second magnetic isolation slot, cooperation between the third magnetic bridge, the first magnetic bridge, and the second magnetic bridge can improve overall strength of the peripheral core.

With reference to the first aspect, in a possible implementation, the central core includes a central core body and a plurality of connecting portions distributed at spacings along a circumferential direction of the central core body. Each of the plurality of connecting portions is connected to a periphery of the central core body. A quantity of the connecting portions is equal to a quantity of the peripheral cores. Every two adjacent connecting portions and the central core body form the mounting position. Because each peripheral core has a corresponding mounting position, the peripheral cores can be conveniently mounted during rotor assembly.

With reference to the first aspect, in a possible implementation, an edge, of each peripheral core, closer to the sleeve is provided with a notch that faces the sleeve. When the rotor is applied to the motor, existence of the notch can reduce the harmonic content in the air-gap flux density of the motor in the no-load state, and reduce noise generated by the motor during startup.

With reference to the first aspect, in a possible implementation, each peripheral core is provided with a positioning through-hole along an axial direction of the peripheral core. The positioning through-hole is configured to position the peripheral core in the rotor. For example, a positioning pin may run through the positioning through-hole, to position the peripheral core in the rotor.

With reference to the first aspect, in a possible implementation, the rotor further includes a rotating shaft, and the rotating shaft penetrates through the axial hole along an axial direction of the rotating shaft.

According to a second aspect, this application provides a motor. The motor includes a hollow stator and the foregoing rotor. The rotor is located in the stator. There is an air gap between a periphery of the rotor and an inner wall of the stator. The rotor in the motor can generate a rotor magnetic field with comparatively high magnetic density, so that a rotation speed of the motor is increased, and further, a maximum power of the motor can be increased (a power of the motor is equal to a product of a rotation speed of the rotor and a torque of the rotor). The maximum power of the motor is positively correlated with power density of the motor. The power density is an amount of output power of the motor per unit volume. The power density of the motor is increased. When the maximum power of the motor is controlled to remain unchanged, a volume of the motor can be designed to be smaller.

According to a third aspect, this application provides a vehicle. The vehicle includes a vehicle frame and the foregoing motor. The motor is mounted to the vehicle frame.

### BRIEF DESCRIPTION OF DRAWINGS

To describe technical solutions in embodiments of this application or in the background more clearly, the following describes accompanying drawings that need to be used in embodiments of this application or in the background.
FIG. 1 is a schematic diagram of a structure of a vehicle according to an embodiment of this application;
FIG. 2 is a schematic plan view of a motor according to an embodiment of this application;
FIG. 3 is a top view of a rotor according to an embodiment of this application;
FIG. 4 is a schematic diagram of a three-dimensional structure of a rotor from which a sleeve is removed according to an embodiment of this application;
FIG. 5 is a schematic exploded view of FIG. 4;
FIG. 6 is a top view of a rotor from which permanent magnets are removed according to an embodiment of this application;
FIG. 7 is a schematic partial view of a rotor according to an embodiment of this application;
FIG. 8 is a schematic partial view of another rotor according to an embodiment of this application;
FIG. 9 is a schematic partial view of still another rotor according to an embodiment not being part of the invention; and
FIG. 10 is a schematic diagram of a three-dimensional structure of a central core according to an embodiment of this application.
a: motor; b: vehicle frame; 1: rotor; 12: central core; 121: central core body; 122: connecting portion; 123: mounting position; 13: peripheral core; 130: open slot; 131: first magnetic slot; 132: second magnetic slot; 133: first magnetic isolation slot; 134: second magnetic isolation slot; 135: third magnetic isolation slot; 136: first magnetic bridge; 137: second magnetic bridge; 138: third magnetic bridge; 139: notch; 139a: positioning through-hole; 14: rotating shaft; 14a: axial hole; 15: first permanent magnet; 16: second permanent magnet; 17: third permanent magnet; 18: fourth permanent magnet; 19: sleeve; 20a: first separation gap; 20b: second separation gap; 20c: third separation gap; 21: first magnetic isolation gap; 22: second magnetic isolation gap; 23: third magnetic isolation gap; 24: fourth magnetic isolation gap; 25: first included angle; 26: second included angle; 2: stator; 3: air gap.

### DESCRIPTION OF EMBODIMENTS

A permanent magnet motor uses a permanent magnet to provide excitation, with no need for an excitation current and with no excitation loss. This can improve efficiency and power density of the motor. The permanent magnet motor may be used as a drive motor of an electric vehicle. The permanent magnet motor includes a stator and a rotor. The stator is formed through lamination, which can reduce an iron loss of the motor during running. The stator is provided with a three-phase alternating-current winding, configured to generate a stator rotating magnetic field. The rotor may be made as solid, or may be formed through lamination. The rotor is provided with a permanent magnet. The permanent magnet is configured to generate a rotor magnetic field.

The permanent magnet motor may be classified into a surface-mounted motor (surface-mounted permanent magnet machine, SPM) and an interior permanent magnet motor (Inserted Permanent Magnet Machine, IPM). In the surface-mounted motor, a permanent magnet is attached to a periphery surface of a rotor core. In the interior motor, a magnetic slot is disposed in a rotor core, and a permanent magnet is disposed in the magnetic slot. A form in which permanent magnets are interiorly disposed may be classified into a straight-line pattern, a single-V pattern, a dual-V pattern, a V+straight-line pattern, and the like.

Compared with that of the surface-mounted permanent magnet motor, a rotor magnetic circuit of the interior permanent magnet motor is asymmetric, and a rotor generates reluctance torque during rotation, so that power density and an overload capability of the motor can be improved, and it is easier to implement field-weakening speed increasing. When the permanent magnet motor is used as a motor, a three-phase current is injected into the three-phase alternating-current winding of the stator, and the stator generates the rotating magnetic field. The rotor magnetic field and the stator rotating magnetic field interact with each other, so that electromagnetic torque is generated on the rotor to drive the rotor to rotate.

In the interior permanent magnet motor, the rotor usually has a magnetic bridge used for strength supporting. The magnetic bridge causes a magnetic leakage phenomenon of the motor. To reduce magnetic leakage of a motor, a conventional means is as follows: removing all magnetic bridges in a rotor, so that the rotor is divided into a plurality of rotor sheets; and disposing a permanent magnet in a gap between the rotor sheets.

For a rotor of a dual-V topology, after all magnetic bridges in the rotor are removed, a quantity of discrete rotor sheets is excessively large, and consequently, a size of the rotor sheet is comparatively small. This increases difficulty of rotor sheet processing, and makes it inconvenient to connect a plurality of rotor sheets and a permanent magnet into a whole.

To make the objectives, technical solutions, and advantages of this application clearer, the following further describes this application in detail with reference to the accompanying drawings.

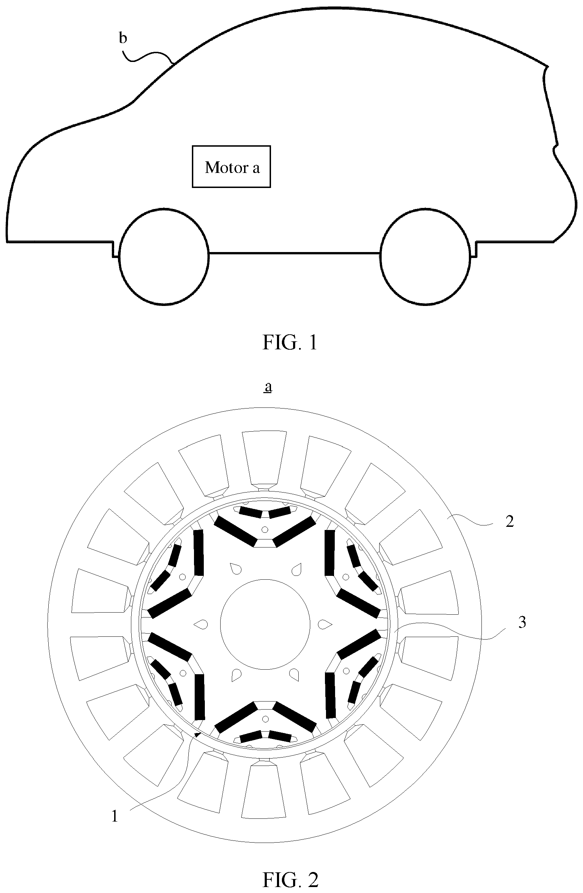

This application discloses a vehicle. The vehicle may be but is not limited to an electric car, an electric bus, an electric motorcycle, or the like. FIG. 1 is a schematic diagram of a structure of a vehicle according to an embodiment of this application. The vehicle may include a motor a and a vehicle frame b. The vehicle frame b may be used as a structural framework of the vehicle. The vehicle frame b can be used for supporting the motor a, and can fasten the motor a. The motor a may be used as a power source for driving the vehicle to travel.

FIG. 2 is a schematic plan view of a motor according to an embodiment of this application. The motor a includes a stator 2 and a rotor 1. The stator 2 may have a cylindrical inner cavity. The rotor 1 is approximately cylindrical. The stator 2 sleeves the rotor 1. The rotor 1 penetrates through the cylindrical inner cavity of the stator 2. The rotor 1 is disposed at a central position in the cylindrical inner cavity of the stator 2. An air gap 3 is reserved between a circumferential outer wall of the rotor 1 and an inner wall of the stator 2. The rotor 1 may generate a rotor magnetic field. When the motor a is powered on, the stator 2 can generate a rotating magnetic field. The rotating magnetic field of the stator 2 and the rotor magnetic field interact with each other, so that the rotor 1 can rotate relative to the stator 2.

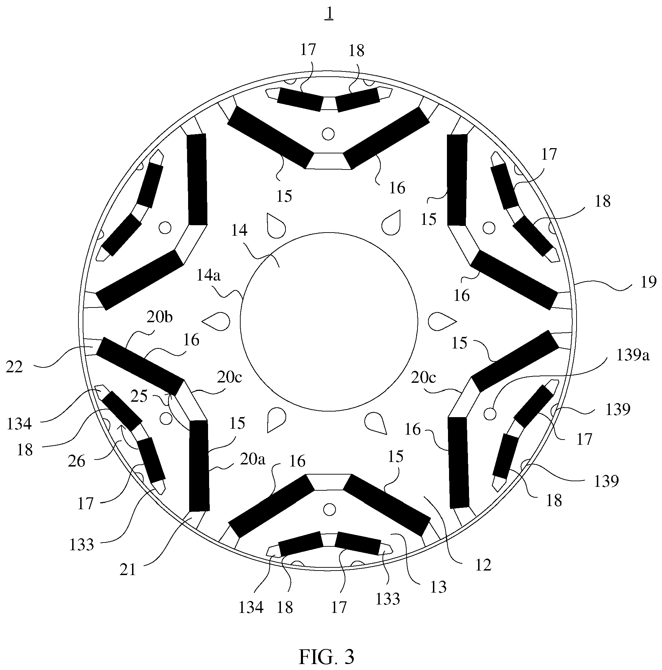

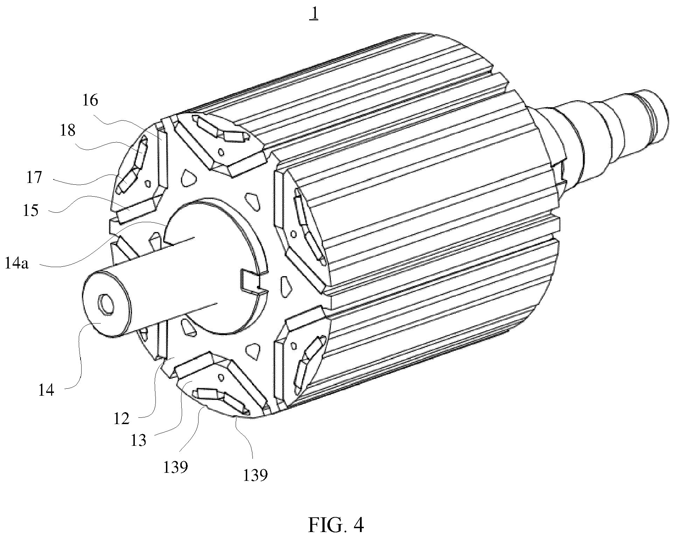

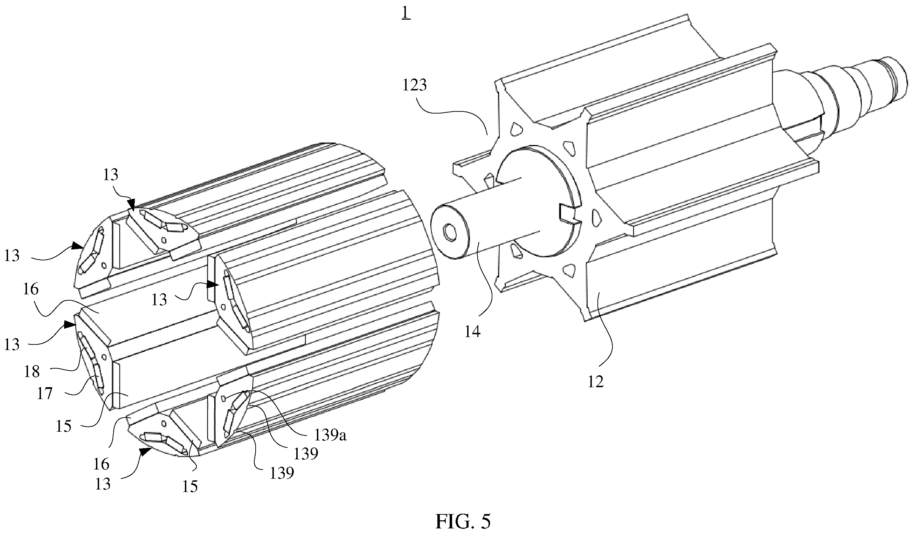

Refer to FIG. 3 to FIG. 5. FIG. 3 is a top view of a rotor according to an embodiment of this application. FIG. 4 is a schematic diagram of a three-dimensional structure of a rotor from which a sleeve is removed according to an embodiment of this application. FIG. 5 is a schematic exploded view of FIG. 4. The rotor 1 includes a rotating shaft 14, a central core 12, a plurality of peripheral cores 13, and a sleeve 19. The central core 12 includes an axial hole 14a that penetrates along an axial direction and a plurality of mounting positions 123 distributed along the axial direction of the central core 12. The rotating shaft 14 penetrates through the axial hole 14a along an axial direction of the rotating shaft 14, and is always connected to the central core 12. The plurality of peripheral cores 13 are in one-to-one correspondence with the plurality of mounting positions 123. Each peripheral core 13 is disposed in a mounting position 123 corresponding to the peripheral core 13. The sleeve 19 is approximately in the shape of a hollow cylinder. The sleeve 19 accommodates the central core 12 and the plurality of peripheral cores 13. The sleeve 19 is in transition fit or interference fit with the central core 12 and the plurality of peripheral cores 13. The sleeve 19 connects the central core 12 and the plurality of peripheral cores 13 into a whole, to improve overall strength of the rotor 1, so that the rotor 1 can adapt to high-speed rotation. The sleeve 19 can prevent a stator 2 of a motor a from transferring heat to the rotor 1, to reduce impact of high temperature on magnetic performance of the rotor 1, thereby improving running performance of the motor a. The sleeve 19 may be made of one of the following materials: carbon fiber, steel, and alloy steel.

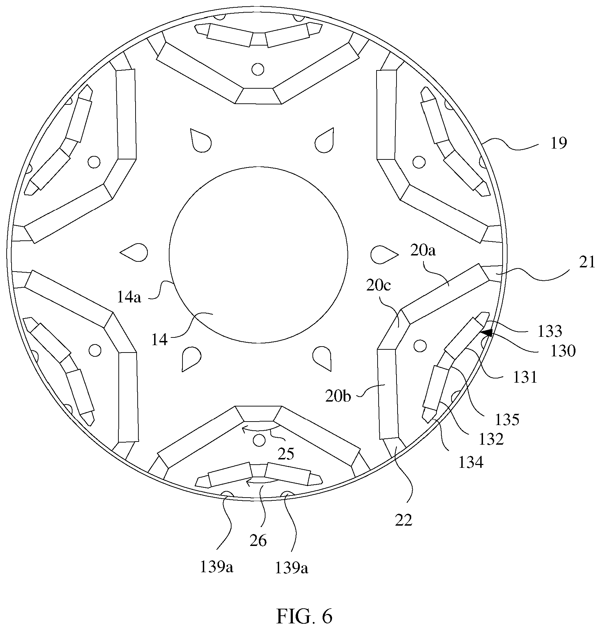

FIG. 6 is a top view of a rotor from which permanent magnets are removed according to an embodiment of this application. Each peripheral core 13 is spaced apart from the central core 12 to form a first separation gap 20a, a second separation gap 20b, and a third separation gap 20c that communicate with each other. The third separation gap 20c is located between the first separation gap 20a and the second separation gap 20b. The first separation gap 20a and the second separation gap 20b form a first included angle 25 less than 180°. The first included angle 25 faces the sleeve 19.

The first separation gap 20a is configured to accommodate a first permanent magnet 15, and the second separation gap 20b is configured to accommodate a second permanent magnet 16. The first permanent magnet 15 and the second permanent magnet 16 are respectively disposed in the first separation gap 20a and the second separation gap 20b, and are located on two sides of the third separation gap 20c. The first permanent magnet 15 and the second permanent magnet 16 are arranged approximately in a V-shaped pattern, and an opening of the V-shaped pattern faces the sleeve 19.

Referring to FIG. 3 and FIG. 6, the third separation gap 20c can isolate the first permanent magnet 15 from the second permanent magnet 16, to reduce magnetic leakage of the first permanent magnet 15 and the second permanent magnet 16. There is a first magnetic isolation gap 21 between the first permanent magnet 15 and the sleeve 19. The first magnetic isolation gap 21 can reduce magnetic leakage of the first permanent magnet 15. There is a second magnetic isolation gap 22 between the second permanent magnet 16 and the sleeve 19. The second magnetic isolation gap 22 can reduce magnetic leakage of the second permanent magnet 16. When the rotor 1 is applied to the motor a, because magnetic leakage of the first permanent magnet 15 and the second permanent magnet 16 in the rotor 1 is reduced, magnetic density of a rotor magnetic field generated by the rotor 1 is increased, so that a rotation speed of the rotor 1 applied to the motor a can be increased. A power of the motor a is equal to a product of a rotation speed of the rotor 1 and a torque of the rotor 1. The rotation speed of the rotor 1 in the motor a is increased, so that a maximum output power of the motor a is increased, thereby increasing power density of the motor a. When the maximum output power of the motor a is controlled to remain unchanged, a volume of the motor a can be designed to be smaller.

In this embodiment provided in this application, a width size of the first separation gap 20a is less than or equal to a width size of the first permanent magnet 15, so that the first permanent magnet 15 is in transition fit or interference fit with the first separation gap 20a, to fasten the first permanent magnet 15 in position in the first separation gap 20a. A width size of the second separation gap 20b is less than or equal to a width size of the second permanent magnet 16, so that the second permanent magnet 16 is in transition fit or interference fit with the second separation gap 20b, to fasten the second permanent magnet 16 in position in the second separation gap 20b.

The width size of the first permanent magnet 15 is equal to the width size of the second permanent magnet 16, and the width size of the first separation gap 20a is equal to the width size of the second separation gap 20b. A width size of the third separation gap 20c may be less than or equal to the width size of the first separation gap 20a. A width size of the first magnetic isolation gap 21 is equal to a width size of the second magnetic isolation gap 22, and the width size of the first magnetic isolation gap 21 is less than or equal to the width size of the first separation gap 20a. When the width size of the third separation gap 20c is less than the width size of the first separation gap 20a, and the width size of the first magnetic isolation gap 21 is less than the width size of the first separation gap 20a, a boundary of the third separation gap 20c can prevent the first permanent magnet 15 from moving to the third separation gap 20c, and a boundary of the first magnetic isolation gap 21 can prevent the first permanent magnet 15 from moving to the first magnetic isolation gap 21. The position of the first permanent magnet 15 can be limited by using the third separation gap 20c and the first magnetic isolation gap 21. A boundary of the third separation gap 20c can prevent the second permanent magnet 16 from moving to the third separation gap 20c. A boundary of the second magnetic isolation gap 22 can prevent the second permanent magnet 16 from moving to the second magnetic isolation gap 22. The position of the second permanent magnet 16 can be limited by using the third separation gap 20c and the second magnetic isolation gap 22.

In a possible implementation, the peripheral core 13 is provided with an open slot 130, and the open slot 130 is configured to accommodate a third permanent magnet 17 and a fourth permanent magnet 18. The third permanent magnet 17 and the fourth permanent magnet 18 are respectively spaced apart from an end wall of the open slot 130 to form a first magnetic isolation slot 133 and a second magnetic isolation slot 134.

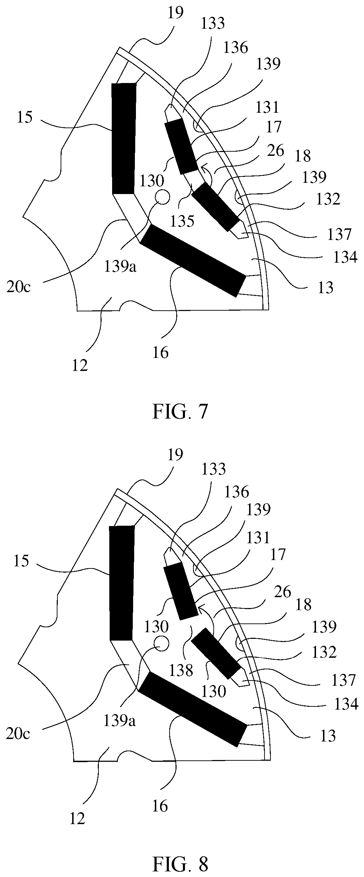

Refer to FIG. 6 and FIG. 7. FIG. 7 is a schematic partial view of a rotor according to an embodiment of this application. An open slot 130 of a peripheral core 13 includes a first magnetic slot 131, a third magnetic isolation slot 135, and a second magnetic slot 132 that communicate with each other. The third magnetic isolation slot 135 is located between the first magnetic slot 131 and the second magnetic slot 132. A third permanent magnet 17 is disposed in the first magnetic slot 131, and a fourth permanent magnet 18 is disposed in the second magnetic slot 132. When the third permanent magnet 17 is mounted, the third permanent magnet 17 is mounted in the first magnetic slot 131 in a manner such as glue dispensing, spring pressing, or injection molding. When the fourth permanent magnet 18 is mounted, the fourth permanent magnet 18 is mounted in the second magnetic slot 132 in a manner such as glue dispensing, spring pressing, or injection molding. The third magnetic isolation slot 135 can isolate the third permanent magnet 17 from the fourth permanent magnet 18, to reduce magnetic leakage of the third permanent magnet 17 and the fourth permanent magnet 18. The third magnetic isolation slot 135 is parallel to the third separation gap 20c.

The first magnetic slot 131 and the second magnetic slot 132 form a second included angle 26 less than 180°, and the second included angle 26 faces the sleeve 19. The second included angle 26 is greater than the first included angle 25. The third permanent magnet 17 disposed in the first magnetic slot 131 and the fourth permanent magnet 18 disposed in the second magnetic slot 132 are arranged approximately in a V-shaped pattern, and an opening of the V-shaped pattern faces the sleeve 19.

The first permanent magnet 15, the second permanent magnet 16, the third permanent magnet 17, and the fourth permanent magnet 18 approximately form a dual-V topology structure. The rotor 1 of the dual-V topology structure can generate a rotor magnetic field with comparatively high magnetic density. When the rotor 1 is applied to the motor a, a magnetomotive force generated by the rotor 1 of the dual-V topology structure is closer to a sine wave, so that harmonic content in flux density of an air gap 3 can be reduced, thereby reducing an iron loss of the motor a in a no-load state. Each of the first permanent magnet 15, the second permanent magnet 16, the third permanent magnet 17, and the fourth permanent magnet 18 is approximately strip-shaped. Each of the first permanent magnet 15, the second permanent magnet 16, the third permanent magnet 17, and the fourth permanent magnet 18 may be a sintered NdFeB magnet.

The first magnetic slot 131 is in transition fit or interference fit with the third permanent magnet 17, to fasten the third permanent magnet 17 in position. The second magnetic slot 132 is in transition fit or interference fit with the fourth permanent magnet 18, to fasten the fourth permanent magnet 18 in position.

The first magnetic isolation slot 133 communicates with the first magnetic slot 131, and the first magnetic isolation slot 133 can reduce magnetic leakage of the third permanent magnet 17. A width size of the first magnetic isolation slot 133 is less than a width size of the first magnetic slot 131. A boundary of the first magnetic isolation slot 133 can prevent the third permanent magnet 17 from moving to the first magnetic isolation slot 133, thereby limiting the position of the third permanent magnet 17.

The second magnetic isolation slot 134 communicates with the second magnetic slot 132, and the second magnetic isolation slot 134 can reduce magnetic leakage of the fourth permanent magnet 18. A width size of the second magnetic isolation slot 134 is less than a width size of the second magnetic slot 132. A boundary of the second magnetic isolation slot 134 can prevent the fourth permanent magnet 18 from moving to the second magnetic isolation slot 134, thereby limiting the position of the fourth permanent magnet 18.

In the peripheral core 13, a part reserved between the first magnetic isolation slot 133 and an edge, of the peripheral core 13, closer to the sleeve 19 is a first magnetic bridge 136. For example, if a material of the peripheral core 13 is silicon steel, in the peripheral core 13, silicon steel reserved between the first magnetic isolation slot 133 and the edge, of the peripheral core 13, closer to the sleeve 19 is the first magnetic bridge 136. A distance between the edge, of the peripheral core 13, closer to the sleeve 19 and the first magnetic isolation slot 133 is a thickness of the first magnetic bridge 136.

In the peripheral core 13, a part reserved between the second magnetic isolation slot 134 and the edge, of the peripheral core 13, closer to the sleeve 19 is a second magnetic bridge 137. If a material of the peripheral core 13 is silicon steel, in the peripheral core 13, silicon steel reserved between the second magnetic isolation slot 134 and the edge, of the peripheral core 13, closer to the sleeve 19 is the second magnetic bridge 137. A distance between the edge, of the peripheral core 13, closer to the sleeve 19 and the second magnetic isolation slot 134 is a thickness of the second magnetic bridge 137.

With the first magnetic bridge 136 and the second magnetic bridge 137, the peripheral core 13 can be of an integral structure, so that the peripheral core 13 can be integrally formed, which facilitates processing of the peripheral core 13.

Thickness sizes of the first magnetic bridge 136 and the second magnetic bridge 137 can affect strength of the peripheral core 13. Larger thicknesses of the first magnetic bridge 136 and the second magnetic bridge 137 indicate higher strength of the peripheral core 13, and can improve overall strength of the rotor 1, so that the strength of the rotor 1 can adapt to high-speed rotation.

The thickness sizes of the first magnetic bridge 136 and the second magnetic bridge 137 can affect magnetic density of a rotor magnetic field generated by the rotor 1. A smaller thickness of the first magnetic bridge 136 indicates that a magnetic flux of the first magnetic bridge 136 is more likely to be saturated, and an effect of limiting magnetic leakage of the third permanent magnet 17 by the first magnetic bridge 136 is better. A smaller thickness of the second magnetic bridge 137 indicates that a magnetic flux of the second magnetic bridge 137 is more likely to be saturated, and an effect of limiting magnetic leakage of the fourth permanent magnet 18 by the second magnetic bridge 137 is better.

In some embodiments, the thickness of the first magnetic bridge 136 is in a range from 1 mm to 3 mm (including 1 mm and 3 mm), and the thickness of the second magnetic bridge 137 is the same as that of the first magnetic bridge 136. Because the peripheral core 13 and the central core 12 are disposed separately, an overall size of the peripheral core 13 is comparatively small. As the thicknesses of the first magnetic bridge 136 and the second magnetic bridge 137 are set to be in the range from 1 mm to 3 mm (including 1 mm and 3 mm) (a value of the thickness sizes of the first magnetic bridge 136 and the second magnetic bridge 137 is less than that of a general magnetic bridge), the first magnetic bridge 136 and the second magnetic bridge 137 can be used for strength supporting of the peripheral core 13, so that the rotor 1 can adapt to high-speed rotation. Furthermore, the first magnetic bridge 136 can effectively limit magnetic leakage of the third permanent magnet 17, and the second magnetic bridge 137 can also effectively limit magnetic leakage of the fourth permanent magnet 18.

The edge, of the peripheral core 13, closer to the sleeve 19 is provided with a notch 139. There may be a plurality of notches 139. The notch 139 is configured to reduce the harmonic content in the flux density of the air gap 3 of the motor a, and reduce noise generated by startup of the motor a.

The peripheral core 13 is provided with a positioning through-hole 139a along an axial direction of the peripheral core 13. The positioning through-hole 139a is configured to position the peripheral core 13 in the rotor 1. For example, a positioning pin runs through the positioning through-hole 139a, to position the peripheral core 13 in the rotor 1.

FIG. 8 is a schematic partial view of another rotor according to an embodiment of this application. A difference from the rotor 1 in FIG. 7 lies in that an open slot 130 of each peripheral core 13 includes a first magnetic slot 131 and a second magnetic slot 132, the first magnetic slot 131 and the second magnetic slot 132 are spaced apart, and a third magnetic bridge 138 is reserved between the first magnetic slot 131 and the second magnetic slot 132 in the peripheral core 13. When the first magnetic slot 131 and the second magnetic slot 132 are disposed in the peripheral core 13, a part reserved between the first magnetic slot 131 and the second magnetic slot 132 is the third magnetic bridge 138. For example, if a material of the peripheral core 13 is silicon steel, when the first magnetic slot 131 and the second magnetic slot 132 are disposed in the peripheral core 13, silicon steel reserved between the first magnetic slot 131 and the second magnetic slot 132 is the third magnetic bridge 138. A thickness size of the third magnetic bridge 138 is a distance between the first magnetic slot 131 and the second magnetic slot 132, and the thickness size of the third magnetic bridge 138 is in a range from 4 mm to 5 mm(including 4mm and 5mm). With the first magnetic bridge 136, the second magnetic bridge 137, and the third magnetic bridge 138, the peripheral core 13 can be of an integral structure, which is conducive to improving overall strength of the peripheral core 13, and facilitates integral forming of the peripheral core 13.

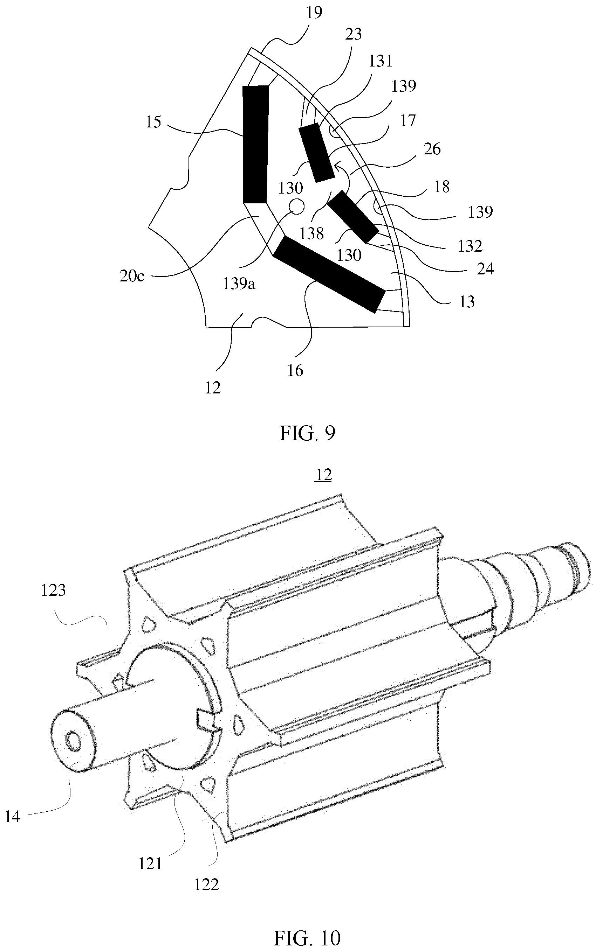

FIG. 9 is a schematic partial view of still another rotor according to an embodiment not being part of the invention. A difference from the rotor 1 in FIG. 7 lies in that an open slot 130 of each peripheral core 13 includes a first magnetic slot 131 and a second magnetic slot 132, the first magnetic slot 131 and the second magnetic slot 132 are spaced apart, and a third magnetic bridge 138 is reserved between the first magnetic slot 131 and the second magnetic slot 132 in the peripheral core 13. A thickness size of the third magnetic bridge 138 is a distance between the first magnetic slot 131 and the second magnetic slot 132, and the thickness size of the third magnetic bridge 138 is in a range from 4 mm to 5 mm(including 4 mm and 5 mm). With the third magnetic bridge 138, the peripheral core 13 can be of an integral structure, which facilitates integral forming of the peripheral core 13.

In the peripheral core 13, a third permanent magnet 17 accommodated in the first magnetic slot 131 and a fourth permanent magnet 18 accommodated in the second magnetic slot 132 are respectively spaced apart from a sleeve 19 to form a third magnetic isolation gap 23 and a fourth magnetic isolation gap 24. The third magnetic isolation gap 23 can reduce magnetic leakage of the third permanent magnet 17, and the fourth magnetic isolation gap 24 can reduce magnetic leakage of the fourth permanent magnet 18.

The third magnetic isolation gap 23 communicates with the first magnetic slot 131. A width size of the third magnetic isolation gap 23 is less than a width size of the first magnetic slot 131. The third magnetic isolation gap 23 can prevent the third permanent magnet 17 from moving to the third magnetic isolation gap 23, thereby limiting a position of the third permanent magnet 17.

The fourth magnetic isolation gap 24 communicates with the second magnetic slot 132. A width size of the fourth magnetic isolation gap 24 is less than a width size of the second magnetic slot 132. The fourth magnetic isolation gap 24 can prevent the fourth permanent magnet 18 from moving to the fourth magnetic isolation gap 24, thereby limiting a position of the fourth permanent magnet 18.

FIG. 10 is a schematic diagram of a three-dimensional structure of a central core according to an embodiment of this application. The central core 12 includes a central core body 121 and a plurality of connecting portions 122. The plurality of connecting portions 122 are distributed at spacings along a circumferential direction of the central core body 121. Each connecting portion 122 is connected to a periphery of the central core body 121. Each connecting portion 122 extends outwards along a radial direction of the central core 12 from a joint with the central core body 121. A quantity of the connecting portions 122 is equal to a quantity of peripheral cores 13. Every two adjacent connecting portions 122 and the central core body 121 form a mounting position 123. Mounting positions 123 are in one-to-one correspondence with the peripheral cores 13. Each peripheral core 13 is disposed in a mounting position 123 corresponding to the peripheral core 13. A shape of the mounting position 123 is adapted to a structural form of the peripheral core 13. This can facilitate assembly of a rotor 1.

It should be noted that all directional indications (for example, up, down, left, right, front, and back) in embodiments of this application are merely used to explain a relative position relationship, motion status, and the like between components in a specific posture (as shown in the accompanying drawings). If the specific posture changes, the directional indication also changes accordingly.

In addition, in this application, words such as "first" and "second" are merely intended for a purpose of description, and shall not be understood as an indication or implication of relative importance or an implicit indication of a quantity of indicated technical features. Therefore, a feature modified by "first" or "second" may explicitly or implicitly include at least one feature. In the descriptions of this application, "a plurality of" means at least two, for example, two or three, unless otherwise specifically limited.

In this application, unless otherwise expressly specified and limited, terms such as "connection" and "fastening" should be understood in a broad sense. For example, "fastening" may be a fixed connection, may be a detachable connection, or may be integration; may be a mechanical connection, or may be an electrical connection; and may be a direct connection, may be an indirect connection through an intermediate medium, or may be communication between insides of two elements or an interaction relationship between two elements, unless otherwise expressly limited. A person of ordinary skill in the art may understand specific meanings of the foregoing terms in this application based on a specific situation.

## Claims

1. A rotor, wherein the rotor comprises a central core (12), a plurality of peripheral cores (13), and a sleeve (19),
wherein
the central core (12) comprises an axial hole that penetrates along an axial direction and a plurality of mounting positions distributed along a circumferential direction of the central core (12);
the plurality of peripheral cores (13) and the central core (12) are always accommodated in the sleeve (19), the plurality of peripheral cores (13) are in one-to-one correspondence with the plurality of mounting positions, each peripheral core (13) is disposed in a corresponding mounting position, each peripheral core (13) is spaced apart from the central core (12) to form a first separation gap (20a), a second separation gap (20b), and a third separation gap (20c) that communicate with each other, the first separation gap (20a) and the second separation gap (20b) form a first included angle less than 180° facing the sleeve (19) and are respectively configured to accommodate a first permanent magnet (15) and a second permanent magnet (16), the first permanent magnet (15) and the second permanent magnet (16) are disposed on two sides of the third separation gap (20c), and the first permanent magnet (15) and the second permanent magnet (16) are respectively spaced apart from the sleeve (19) to form a first magnetic isolation gap (21) and a second magnetic isolation gap (22); and
each peripheral core (13) is provided with an open slot, the open slot is configured to accommodate a third permanent magnet (17) and a fourth permanent magnet (18), and the third permanent magnet (17) and the fourth permanent magnet (18) are respectively spaced apart from the sleeve (19) to form a third magnetic isolation gap (23) and a fourth magnetic isolation gap (24) or spaced apart from an end wall of the open slot to form a first magnetic isolation slot (133) or a second magnetic isolation slot (134);
wherein the open slot comprises a first magnetic slot, a third magnetic isolation slot (135), and a second magnetic slot that communicate with each other, the first magnetic slot and the second magnetic slot form a second included angle less than 180° facing the sleeve (19) and are respectively configured to accommodate the third permanent magnet (17) and the fourth permanent magnet (18), and the third permanent magnet (17) and the fourth permanent magnet (18) are disposed on two sides of the third magnetic isolation slot (135);
**characterized in that** the third magnetic isolation slot (135) is parallel to the third separation gap (20c).

2. The rotor according to claim 1, wherein the first permanent magnet (15) is in transition fit or interference fit with the first separation gap (20a), and the second permanent magnet (16) is in transition fit or interference fit with the second separation gap (20b).

3. The rotor according to claim 2, wherein a width size of the first separation gap (20a) is equal to a width size of the second separation gap (20b), and a width size of the third separation gap (20c) is less than or equal to the width size of the first separation gap (20a).

4. The rotor according to claim 1, wherein the third permanent magnet (17) is in transition fit or interference fit with the first magnetic slot, and the fourth permanent magnet (18) is in transition fit or interference fit with the second magnetic slot.

5. The rotor according to claim 4, wherein a width size of the first magnetic slot is equal to a width size of the second magnetic slot, and a width size of the third magnetic isolation slot (135) is less than or equal to the width size of the first magnetic slot.

6. The rotor according to claim 1, wherein the first included angle is less than the second included angle.

7. The rotor according to claim 1, wherein the open slot comprises a first magnetic slot and a second magnetic slot, the first magnetic slot and the second magnetic slot are spaced apart, and the first magnetic slot and the second magnetic slot form a second included angle less than 180° facing the sleeve (19).

8. The rotor according to any one of claims 1 to 7, wherein the central core (12) comprises a central core body (121) and a plurality of connecting portions distributed at spacings along a circumferential direction of the central core body (121), each of the plurality of connecting portions is connected to a periphery of the central core body (121), a quantity of the connecting portions is equal to a quantity of the peripheral cores (13), and every two adjacent connecting portions and the central core body (121) form the mounting position.

9. The rotor according to any one of claims 1 to 7, wherein an edge, of each peripheral core (13), closer to the sleeve (19) is provided with a notch that faces the sleeve (19).

10. The rotor according to any one of claims 1 to 7, wherein each peripheral core (13) is provided with a positioning through-hole along an axial direction of the peripheral core (13).

11. The rotor according to any one of claims 1 to 7, wherein the rotor further comprises a rotating shaft, and the rotating shaft penetrates through the axial hole along an axial direction of the rotating shaft.

12. A motor, wherein the motor comprises a hollow stator and the rotor according to any one of claims 1 to 11, the rotor is disposed in the stator, and an air gap is formed between a periphery of the rotor and an inner wall of the stator.

13. A vehicle, wherein the vehicle comprises a vehicle frame and the motor according to claim 12, and the motor is mounted to the vehicle frame.

## Patentansprüche

1. Rotor, wobei der Rotor einen zentralen Kern (12), eine Vielzahl von peripheren Kernen (13) und eine Hülse (19) umfasst,
wobei
der zentrale Kern (12) ein axiales Loch, das entlang einer axialen Richtung durchdringt, und eine Vielzahl von Montagepositionen umfasst, die entlang einer Umfangsrichtung des zentralen Kerns (12) verteilt sind;
die Vielzahl von peripheren Kernen (13) und der zentrale Kern (12) stets in der Hülse (19) aufgenommen sind, die Vielzahl von peripheren Kernen (13) in einer Eins-zu-eins-Entsprechung mit der Vielzahl von Montagepositionen stehen, jeder periphere Kern (13) in einer entsprechenden Montageposition angeordnet ist, jeder periphere Kern (13) von dem zentralen Kern (12) beabstandet ist, um einen ersten Trennspalt (20a), einen zweiten Trennspalt (20b) und einen dritten Trennspalt (20c) auszubilden, die miteinander kommunizieren, der erste Trennspalt (20a) und der zweite Trennspalt (20b) einen ersten eingeschlossenen Winkel von weniger als 180°, welcher der Hülse (19) zugewandt ist, ausbilden und jeweils dazu konfiguriert sind, einen ersten Dauermagneten (15) und einen zweiten Dauermagneten (16) aufzunehmen, der erste Dauermagnet (15) und der zweite Dauermagnet (16) auf zwei Seiten des dritten Trennspalts (20c) angeordnet sind und der erste Dauermagnet (15) und der zweite Dauermagnet (16) jeweils von der Hülse (19) beabstandet sind, um einen ersten magnetischen Isolationsspalt (21) und einen zweiten magnetischen Isolationsspalt (22) auszubilden; und
jeder periphere Kern (13) mit einem offenen Schlitz bereitgestellt ist, der offene Schlitz dazu konfiguriert ist, einen dritten Dauermagneten (17) und einen vierten Dauermagneten (18) aufzunehmen, und der dritte Dauermagnet (17) und der vierte Dauermagnet (18) jeweils von der Hülse (19) beabstandet sind, um einen dritten magnetischen Isolationsspalt (23) und einen vierten magnetischen Isolationsspalt (24) auszubilden, oder von einer Endwand des offenen Schlitzes beabstandet sind, um einen ersten magnetischen Isolationsschlitz (133) oder einen zweiten magnetischen Isolationsschlitz (134) auszubilden;
wobei der offene Schlitz einen ersten Magnetschlitz, einen dritten magnetischen Isolationsschlitz (135) und einen zweiten Magnetschlitz umfasst, die miteinander kommunizieren, der erste Magnetschlitz und der zweite Magnetschlitz einen zweiten eingeschlossenen Winkel von weniger als 180°, welcher der Hülse (19) zugewandt ist, ausbilden und jeweils dazu konfiguriert sind, den dritten Dauermagneten (17) und den vierten Dauermagneten (18) aufzunehmen, und der dritte Dauermagnet (17) und der vierte Dauermagnet (18) auf zwei Seiten des dritten magnetischen Isolationsschlitzes (135) angeordnet sind;
**dadurch gekennzeichnet, dass** der dritte magnetische Isolationsschlitz (135) parallel zu dem dritten Trennspalt (20c) verläuft.

2. Rotor nach Anspruch 1, wobei der erste Dauermagnet (15) in Übergangspassung oder Presspassung mit dem ersten Trennspalt (20a) steht und der zweite Dauermagnet (16) in Übergangspassung oder Presspassung mit dem zweiten Trennspalt (20b) steht.

3. Rotor nach Anspruch 2, wobei eine Breitengröße des ersten Trennspalts (20a) gleich einer Breitengröße des zweiten Trennspalts (20b) ist und eine Breitengröße des dritten Trennspalts (20c) kleiner oder gleich der Breitengröße des ersten Trennspalts (20a) ist.

4. Rotor nach Anspruch 1, wobei der dritte Dauermagnet (17) in Übergangspassung oder Presspassung mit dem ersten Magnetschlitz steht und der vierte Dauermagnet (18) in Übergangspassung oder Presspassung mit dem zweiten Magnetschlitz steht.

5. Rotor nach Anspruch 4, wobei eine Breitengröße des ersten Magnetschlitzes gleich einer Breitengröße des zweiten Magnetschlitzes ist und eine Breitengröße des dritten magnetischen Isolationsschlitzes (135) kleiner oder gleich der Breitengröße des ersten Magnetschlitzes ist.

6. Rotor nach Anspruch 1, wobei der erste eingeschlossene Winkel kleiner als der zweite eingeschlossene Winkel ist.

7. Rotor nach Anspruch 1, wobei der offene Schlitz einen ersten Magnetschlitz und einen zweiten Magnetschlitz umfasst, der erste Magnetschlitz und der zweite Magnetschlitz voneinander beabstandet sind und der erste Magnetschlitz und der zweite Magnetschlitz einen zweiten eingeschlossenen Winkel von weniger als 180°, welcher der Hülse (19) zugewandt ist, ausbilden.

8. Rotor nach einem der Ansprüche 1 bis 7, wobei der zentrale Kern (12) einen zentralen Kernkörper (121) und eine Vielzahl von Verbindungsabschnitten umfasst, die in Abständen entlang einer Umfangsrichtung des zentralen Kernkörpers (121) verteilt sind, wobei jeder der Vielzahl von Verbindungsabschnitten mit einer Peripherie des zentralen Kernkörpers (121) verbunden ist, die Anzahl der Verbindungsabschnitte gleich der Anzahl der peripheren Kerne (13) ist und jeweils zwei benachbarte Verbindungsabschnitte und der zentrale Kernkörper (121) die Montageposition ausbilden.

9. Rotor nach einem der Ansprüche 1 bis 7, wobei eine Kante jedes peripheren Kerns (13), die näher an der Hülse (19) liegt, mit einer Kerbe bereitgestellt ist, welche der Hülse (19) zugewandt ist.

10. Rotor nach einem der Ansprüche 1 bis 7, wobei jeder periphere Kern (13) mit einem Positionierungsdurchgangsloch entlang einer axialen Richtung des peripheren Kerns (13) bereitgestellt ist.

11. Rotor nach einem der Ansprüche 1 bis 7, wobei der Rotor ferner eine Drehwelle umfasst und die Drehwelle das axiale Loch entlang einer axialen Richtung der Drehwelle durchdringt.

12. Motor, wobei der Motor einen hohlen Stator und den Rotor nach einem der Ansprüche 1 bis 11 umfasst, der Rotor in dem Stator angeordnet ist und ein Luftspalt zwischen einem Umfang des Rotors und einer Innenwand des Stators ausgebildet ist.

13. Fahrzeug, wobei das Fahrzeug einen Fahrzeugrahmen und den Motor nach Anspruch 12 umfasst und der Motor an dem Fahrzeugrahmen montiert ist.

## Revendications

1. Rotor, dans lequel le rotor comprend un noyau central (12), une pluralité de noyaux périphériques (13), et un manchon (19), dans lequel
le noyau central (12) comprend un trou axial qui pénètre le long d'une direction axiale et une pluralité de positions de montage réparties le long d'une direction circonférentielle du noyau central (12) ;
la pluralité de noyaux périphériques (13) et le noyau central (12) sont toujours logés dans le manchon (19), la pluralité de noyaux périphériques (13) sont en correspondance biunivoque avec la pluralité de positions de montage, chaque noyau périphérique (13) est disposé dans une position de montage correspondante, chaque noyau périphérique (13) est espacé du noyau central (12) pour former un premier espace de séparation (20a), un deuxième espace de séparation (20b), et un troisième espace de séparation (20c) qui communiquent entre eux, le premier espace de séparation (20a) et le deuxième espace de séparation (20b) forment un premier angle inclus inférieur à 180° face au manchon (19) et sont respectivement configurés pour loger un premier aimant permanent (15) et un deuxième aimant permanent (16), le premier aimant permanent (15) et le deuxième aimant permanent (16) sont disposés sur deux côtés du troisième espace de séparation (20c), et le premier aimant permanent (15) et le deuxième aimant permanent (16) sont respectivement espacés du manchon (19) pour former un premier espace d'isolation magnétique (21) et un deuxième espace d'isolation magnétique (22) ; et
chaque noyau périphérique (13) est pourvu d'une fente ouverte, la fente ouverte est configurée pour loger un troisième aimant permanent (17) et un quatrième aimant permanent (18), et le troisième aimant permanent (17) et le quatrième aimant permanent (18) sont respectivement espacés du manchon (19) pour former un troisième espace d'isolation magnétique (23) et un quatrième espace d'isolation magnétique (24) ou espacés d'une paroi d'extrémité de la fente ouverte pour former une première fente d'isolation magnétique (133) ou une deuxième fente d'isolation magnétique (134) ;
dans lequel la fente ouverte comprend une première fente magnétique, une troisième fente d'isolation magnétique (135), et une seconde fente magnétique qui communiquent entre elles, la première fente magnétique et la seconde fente magnétique forment un second angle inclus inférieur à 180° face au manchon (19) et sont respectivement configurées pour loger le troisième aimant permanent (17) et le quatrième aimant permanent (18), et le troisième aimant permanent (17) et le quatrième aimant permanent (18) sont disposés sur deux côtés de la troisième fente d'isolation magnétique (135) ;
**caractérisé en ce que** la troisième fente d'isolation magnétique (135) est parallèle au troisième espace de séparation (20c).

2. Rotor selon la revendication 1, dans lequel le premier aimant permanent (15) est en ajustement de transition ou en ajustement serré avec le premier espace de séparation (20a), et le deuxième aimant permanent (16) est en ajustement de transition ou en ajustement serré avec le deuxième espace de séparation (20b).

3. Rotor selon la revendication 2, dans lequel une taille de largeur du premier espace de séparation (20a) est égale à une taille de largeur du deuxième espace de séparation (20b), et une taille de largeur du troisième espace de séparation (20c) est inférieure ou égale à la taille de largeur du premier espace de séparation (20a).

4. Rotor selon la revendication 1, dans lequel le troisième aimant permanent (17) est en ajustement de transition ou en ajustement serré avec la première fente magnétique, et le quatrième aimant permanent (18) est en ajustement de transition ou en ajustement serré avec la seconde fente magnétique.

5. Rotor selon la revendication 4, dans lequel la largeur de la première fente magnétique est égale à la largeur de la seconde fente magnétique, et la largeur de la troisième fente d'isolation magnétique (135) est inférieure ou égale à la largeur de la première fente magnétique.

6. Rotor selon la revendication 1, dans lequel le premier angle inclus est inférieur au second angle inclus.

7. Rotor selon la revendication 1, dans lequel la fente ouverte comprend une première fente magnétique et une seconde fente magnétique, la première fente magnétique et la seconde fente magnétique sont espacées, et la première fente magnétique et la seconde fente magnétique forment un second angle inclus inférieur à 180 ° face au manchon (19).

8. Rotor selon l'une quelconque des revendications 1 à 7, dans lequel le noyau central (12) comprend un corps de noyau central (121) et une pluralité de parties de connexion réparties à des espacements le long d'une direction circonférentielle du corps de noyau central (121), chacune de la pluralité de parties de connexion est connectée à une périphérie du corps de noyau central (121), une quantité des parties de connexion est égale à une quantité des noyaux périphériques (13), et toutes les deux parties de connexion adjacentes et le corps de noyau central (121) forment la position de montage.

9. Rotor selon l'une quelconque des revendications 1 à 7, dans lequel un bord, de chaque noyau périphérique (13), plus proche du manchon (19) est pourvu d'une encoche qui fait face au manchon (19).

10. Rotor selon l'une quelconque des revendications 1 à 7, dans lequel chaque noyau périphérique (13) est pourvu d'un trou traversant de positionnement le long d'une direction axiale du noyau périphérique (13).

11. Rotor selon l'une quelconque des revendications 1 à 7, dans lequel le rotor comprend également un arbre rotatif, et l'arbre rotatif pénètre à travers le trou axial le long d'une direction axiale de l'arbre rotatif.

12. Moteur, dans lequel le moteur comprend un stator creux et le rotor selon l'une quelconque des revendications 1 à 11, le rotor est disposé dans le stator, et un entrefer est formé entre une périphérie du rotor et une paroi intérieure du stator.

13. Véhicule, dans lequel le véhicule comprend un châssis de véhicule et le moteur selon la revendication 12, et le moteur est monté sur le châssis de véhicule.
